# EUROPÄISCHE PATENTSCHRIFT

(11) **EP 0 886 096 B1**
(45) Veröffentlichungstag und Bekanntmachung des Hinweises auf die Patenterteilung: **13.11.2002**
(21) Anmeldenummer: 98108297.7
(22) Anmeldetag: 07.05.1998
(51) Int. Cl.: F16L 33/00

(54) **Steckverbindungseinrichtung sowie mit einer oder mehreren Steckverbindungseinrichtung ausgestattete Fluidverteilereinrichtung**
Connection device and fluid distributor with one or more of said connection devices
Dispositif de connexion et distributeur de fluide comportant un ou plusieurs de ces dispositifs de connexion

(30) Priorität: 19.06.1997 DE 19725999
(43) Veröffentlichungstag der Anmeldung: 23.12.1998
(73) Patentinhaber: FESTO AG & Co, 73734 Esslingen (DE)
(72) Erfinder: Stoll, Kurt, Dr., 73732 Esslingen (DE); Müller, Lothar, 73734 Esslingen (DE)
(74) Vertreter: Abel, Martin, Dipl.-Ing.

(56) Entgegenhaltungen:
- EP-A- 0 493 972
- DE-C- 4 039 066
- FR-A- 2 196 448

## Beschreibung

Die vorliegende Erfindung betrifft eine Steckverbindungseinrichtung zum Anschließen eines im Querschnitt eine kreisförmige Ausgangsgestalt aufweisenden Schlauches, mit einem einen Strömungskanal enthaltenden Aufnahmeteil, das innen eine mit dem Strömungskanal kommunizierende Ausnehmung enthält, in die der anzuschließende Schlauch einsteckbar ist und in der innere Beaufschlagungsmittel vorgesehen sind, die in wenigstens einer Beaufschlagungszone einen länglichen, oval oder elliptisch konturierten Beaufschlagungsquerschnitt definieren, dessen Abmessungen in Richtung der Hauptachse größer und in Richtung der hierzu rechtwinkeligen Nebenachse kleiner sind als der Außendurchmesser des Ausgangsgestalt aufweisenden Schlauches, wobei die inneren Beaufschlagungsmittel den eingesteckten Schlauch am Außenumfang so beaufschlagen, daß sein Endabschnitt eine im Querschnitt längliche Verformungsgestalt einnimmt.

Eine Steckverbindungseinrichtung dieser Art geht aus der FR 2 196 448 hervor. Sie verfügt dort über ein mit einem Gewinde versehenes Aufnahmeteil, das in ein mit Druckmedium zu versorgendes Bauteil einschraubbar ist und das über eine Ausnehmung verfügt, in die ein anzuschließender Schlauch eingesteckt werden kann. Um eine gute Abdichtung zu gewährleisten, hat die Ausnehmung einen leicht ovalen Querschnitt, so daß ihre Innenumfangsfläche als Beaufschlagungsmittel wirkt, die dem eingesteckten Endabschnitt des ursprünglich kreisförmige Ausgangsgestalt aufweisenden Schlauches eine entsprechend längliche Verformungsgestalt auferlegt.

Ein weiterer Gegenstand der vorliegenden Erfindung ist eine Steckverbindungseinrichtung zum Anschließen eines im Querschnitt eine kreisförmige Ausgangsgestalt aufweisenden Schlauches, mit einem einen Strömungskanal enthaltenden rohrähnlichen Aufnahmeteil, auf das der anzuschließende Schlauch aufsteckbar ist und an dessen Außenumfang äußere Beaufschlagungsmittel vorgesehen sind, die in wenigstens einer Beaufschlagungszone einen länglichen, oval oder elliptisch konturierten Beaufschlagungsquerschnitt definieren, dessen Abmessungen in Richtung der Hauptachse größer und in Richtung der hierzu rechtwinkeligen Nebenachse geringer sind als der Innendurchmesser des Ausgangsgestalt aufweisenden Schlauches.

Eine Steckverbindungseinrichtung dieser Art geht beispielsweise aus der US 5 165 733 hervor. Sie verfügt über ein rohrähnliches Aufnahmeteil, das außen über ein sich konisch erweiterndes zahnliches Beaufschlagungsmittel verfügt, das einen länglichen und beispielsweise ovalen Beaufschlagungsquerschnitt definiert. Wird ein ursprünglich kreisförmig konturierter Schlauch aufgesteckt, weitet er sich mit länglichem Querschnitt auf, wobei der im aufgesteckten Zustand hinter dem Beaufschlagungsmittel liegende Längenabschnitt des Schlauches wieder in die kreisförmige Ausgangsgestalt zurückkehrt. Der im Innern des Aufnahmeteils verlaufende Strömungskanal hat einen kreisförmigen Querschnitt. Das Beaufschlagungsmittel dient vorwiegend dazu, den aufgesteckten Schlauch unverdrehbar zu fixieren.

Ein dritter Gegenstand der vorliegenden Erfindung betrifft eine mit wenigstens einer Steckverbindungseinrichtung ausgestattete Fluidverteilereinrichtung, die Über wenigstens ein Gehäuse verfügt, das im Bereich wenigstens einer länglichen Außenfläche mindestens eine zum Anschließen eines im Querschnitt eine kreisförmige Ausgangsgestalt aufweisenden Schlauches dienende Steckverbindungseinrichtung aufweist, zu der ein Aufnahmeteil gehört, an dem einen Beaufschlagungsquerschnitt definierende Beaufschlagungsmittel vorgesehen sind, die den durch einen Steckvorgang angeschlossenen Schlauch beaufschlagen.

Ein ähnlicher vierter Gegenstand der vorliegenden Erfindung betrifft eine mit einer Mehrzahl von Steckverbindungseinrichtungen ausgestattete Fluidverteilereinrichtung, bei der mehrere zum Anschließen von im Querschnitt eine kreisförmige Ausgangsgestalt aufweisenden Schläuchen dienende Steckverbindungseinrichtungen in wenigstens einer Reihe von jeweils zugeordneten Steckverbindungseinrichtungen aufeinanderfolgend angeordnet sind, wobei jede Steckverbindungseinrichtung über in wenigstens einer Beaufschlagungszone einen Beaufschlagungsquerschnitt definierende Beaufschlagungsmittel verfügt, die den durch einen Steckvorgang angeschlossenen Schlauch beaufschlagen.

Eine Fluidverteilereinrichtung nach Art der beiden vorgenannten Ausführungen geht beispielsweise aus der EP 0 493 972 A2 hervor. Sie umfaßt mehrere mit jeweils einem Mehrwegeventil versehene Verteilereinheiten, die jeweils ein Gehäuse enthalten, das an einer eine längliche Außenfläche aufweisenden Stirnseite mit zwei übereinanderliegenden Steckverbindungseinrichtungen versehen ist. Durch batterieartige Anordnung der Verteilereinheiten ergeben sich zwei Reihen von aufeinanderfolgend angeordneten Steckverbindungseinrichtungen, die mit geringem Abstand unmittelbar nebeneinander liegen. An jede Steckverbindungseinrichtung ist durch einen Steckvorgang ein Schlauch anschließbar, der dazu dient, ein Druckmedium zwischen der Fluidverteilereinrichtung und einem angeschlossenen Verbraucher zu transportieren.

Durch ständige Optimierung der Technik von zur Steuerung von Druckmedien und insbesondere von Druckluft eingesetzter Ventile können zunehmend kleinere Baugrößen realisiert werden. Ein Problem bei der Miniaturisierung bereitet jedoch die Bereitstellung entsprechend kleiner Steckverbindungseinrichtungen, um die zur Führung des Strömungsmediums wie Druckluft oder Vakuum dienenden elastischen Schläuche anschließen zu können. So wäre es im Falle der Fluidverteilereinrichtung gemäß EP 0 493 972 A2 nicht möglich, die Baubreite der vorhandenen Ventileinheiten noch weiter zu reduzieren, wenn nicht gleichzeitig eine Reduzierung der Baugröße der Steckverbindungseinrichtungen einhergeht. Letzterem sind aber dadurch Grenzen gesetzt, daß zur Bereitstellung ausreichender Durchflußwerte gewisse Strömungsquerschnitte nicht unterschritten werden können.

Es ist daher die Aufgabe der vorliegenden Erfindung, in bezug auf Steckverbindungseinrichtungen Maßnahmen vorzuschlagen, die kompaktere Ausgestaltungen der mit ihnen ausgestatteten Bauteile ermöglichen.

Zur Lösung dieser Aufgabe ist bei der eingangs genannten, eine Ausnehmung enthaltenden Steckverbindungseinrichtung vorgesehen, daß das Aufnahmeteil zumindest im Bereich der Beaufschlagungszone eine im Querschnitt längliche, oval oder elliptisch gestaltete Außenkontur aufweist, deren Hauptachse mit derjenigen des Beaufschlagungsquerschnittes zusammenfällt.

Auf diese Weise verfügt das Aufnahmeteil wenigstens über die axiale Länge der Beaufschlagungszone sowohl innen als auch außen über einen länglichen, ovalen oder elliptischen Querschnitt, wobei die Querschnittskonturen so gelegt sind, daß ihre Hauptachsen zusammenfallen. Dadurch ergibt sich eine Steckverbindungseinrichtung, die in einer Vorzugsrichtung, nämlich in der Richtung der Nebenachsen, über extrem kompakte Querabmessungen verfügt, was bei entsprechender Orientierung zur Folge hat, daß auch ein mit der Steckverbindungseinrichtung ausgestattetes Bauteil schmäler ausgeführt werden kann.

Vergleichbare Vorteile ergeben sich bei dem eingangs als zweites genannten Erfindungsgegenstand, der über ein rohrähnliches Aufnahmeteil verfügt, auf das der anzuschließende Schlauch aufsteckbar ist, wenn gemäß dem kennzeichenden Teil des entsprechenden unabhängigen Anspruches der Strömungskanal zumindest im Bereich der Beaufschlagungszone eine im Querschnitt längliche, oval oder elliptisch gestaltete Innenkontur aufweist, deren Hauptachse mit derjenigen des Beaufschlagungsquerschnittes zusammenfällt, wobei die äußeren Beaufschlagungsmittel den aufgesteckten Schlauch am Innenumfang so beaufschlagen, daß sein Endabschnitt eine im Querschnitt längliche Verformungsgestalt einnimmt.

Im Vergleich zur Steckverbindungseinrichtung gemäß US 5 165 733 sind die Beaufschlagungsmittel nun derart ausgeführt, daß insbesondere der Endabschnitt des aufgesteckten Schlauches eine im Querschnitt längliche Verformungsgestalt einnimmt, so daß zwar in einer Richtung größere Abmessungen vorliegen, dies jedoch mit einer Reduzierung der Abmessungen in einer hierzu senkrechten Richtung einhergeht. Zusätzlich ist auch der Strömungskanal mit entsprechend länglichem Querschnitt versehen und oval oder elliptisch ausgeführt, so daß ein bezüglich des verformten Schlauches optimaler Strömungsquerschnitt zur Verfügung steht. Durch das Zusammenfallen der Hauptachsen der Innenkontur des Strömungskanals und des äußeren Beaufschlagungsquerschnittes sind wiederum in einer Vorzugsrichtung besonders schmale Abmessungen möglich, die eine platzsparende Verwendung der Steckverbindungseinrichtung gestatten.

Besondere Vorteile ergeben sich im Zusammenhang mit Fluidverteilereinrichtungen gemäß den eingangs geschilderten dritten und vierten Erfindungsvarianten, die mit den geschilderten Steckverbindungseinrichtungen ausgestaltet und gemäß den Ansprüchen 14 oder 18 ausgebildet sind.

In beiden Fällen ermöglicht die erfindungsgemäße Ausgestaltung und Anordnung der Steckverbindungseinrichtung(en) die Realisierung von Fluidverteilereinrichtungen mit vor allem in einer Richtung besonders kompakten Abmessungen. Die Steckverbindungseinrichtung(en) wird bzw. werden so angeordnet, daß ihre Nebenachsen in die Richtung weisen, in der die kompaktesten Abmessungen gewünscht sind. Auf diese Weise lassen sich beispielsweise einzelne Ventileinheiten sehr schmal ausführen, und auch Fluidverteilereinrichtungen, die über mehrere Ventileinheiten verfügen, können platzsparend zusammengefaßt werden.

Die verschiedenen Erfindungsvarianten werden nachfolgend anhand der beiliegenden Zeichnung näher erläutert. In dieser zeigen:
- Fig. 1: eine aus mehreren Verteilereinheiten zusammengesetzte Fluidverteilereinrichtung, die mit mehreren, teils nur durch ihre Mittellinie angedeuteten Steckverbindungseinrichtungen versehen ist, wobei zwei der Steckverbindungseinrichtungen im Zustand vor der Montage an der Fluidverteilereinrichtung gezeigt sind,
- Fig. 2: die Steckverbindungseinrichtung aus Fig. 1, teilweise im Längsschnitt gemäß Schnittlinie II-II entlang den Nebenachsen, wobei ein Zustand gezeigt ist, bei dem die Steckverbindungseinrichtung an der Fluidverteilereinrichtung montiert und ein Schlauch aufgesteckt ist,
- Fig. 3: die Steckverbindungseinrichtung aus Fig. 2 in Alleindarstellung und teilweise im Längsschnitt gemäß Schnittlinie III-III aus Fig. 1 entlang der Hauptachsen,
- Fig. 4: eine Rückansicht der Steckverbindungseinrichtung mit Blickrichtung gemäß Pfeil IV aus Fig. 3,
- Fig. 5: ein Querschnitt durch die Steckverbindungseinrichtung gemäß Linie V-V aus Fig. 3, wobei strichpunktiert der aufgesteckte Schlauch angedeutet ist,
- Fig. 6: eine weitere Ausführungsform einer Steckverbindungseinrichtung, wobei der anzuschließende Schlauch im Vergleich zur Ausführungsform der Fig. 1 bis 5 in eine Ausnehmung eingesteckt wird, teilweise im Längsschnitt entlang der Hauptachsen gemäß Schnittlinie VI-VI aus Fig. 8,
- Fig. 7: die Steckverbindungseinrichtung aus Fig. 6, teilweise im Längsschnitt gemäß Schnittlinie VII-VII aus Fig. 8 entlang der Nebenachsen,
- Fig. 8: die Steckverbindungseinrichtung der Fig. 6 und 7 in Vorderansicht mit Blick gemäß Pfeil VIII aus Fig. 7, wobei der eingesteckte Schlauch wie im Falle der Fig. 6 und 7 strichpunktiert angedeutet ist,
- Fig. 9: eine weitere Ausführungsform, wobei das Auf - nahmeteil im Längsschnitt entsprechend Schnittlinie IX-IX aus Fig. 12 und ein in der Ausnehmung fixierter Haltekörper ungeschnitten dargestellt ist und wobei durch strichpunktierte Schraffur verdeutlicht ist, daß das Aufnahmeteil auch Bestandteil eines Gehäuses von beispielsweise einer Fluidverteilereinrichtung der in Fig. 1 gezeigten Art sein kann,
- Fig. 10: eine mit der Fig. 9 vergleichbare Längsschnittdarstellung gemäß Schnittlinie X-X aus Fig. 12,
- Fig. 11: eine Vorderansicht auf die Steckverbindungseinrichtung aus Fig. 9 und 10 mit Blick gemäß Pfeil XI aus Fig. 9,
- Fig. 12: einen Querschnitt durch die Steckverbindungseinrichtung gemäß Schnittlinie XII-XII aus Fig. 9, wobei der Haltekörper nicht dargestellt ist, und
- Fig. 13: eine Stirnansicht des bei der Steckverbindungseinrichtung gemäß Fig. 9 und 10 eingesetzten Haltekörpers mit Blick gemäß Pfeil XIII auf die in die Ausnehmung hineinragenden Haltepartien.

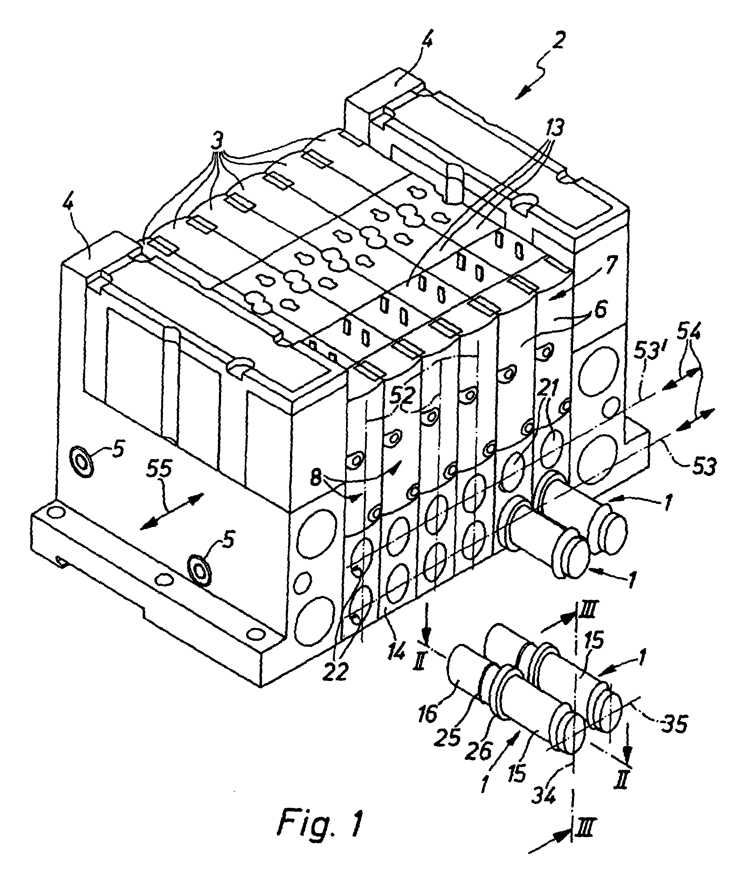

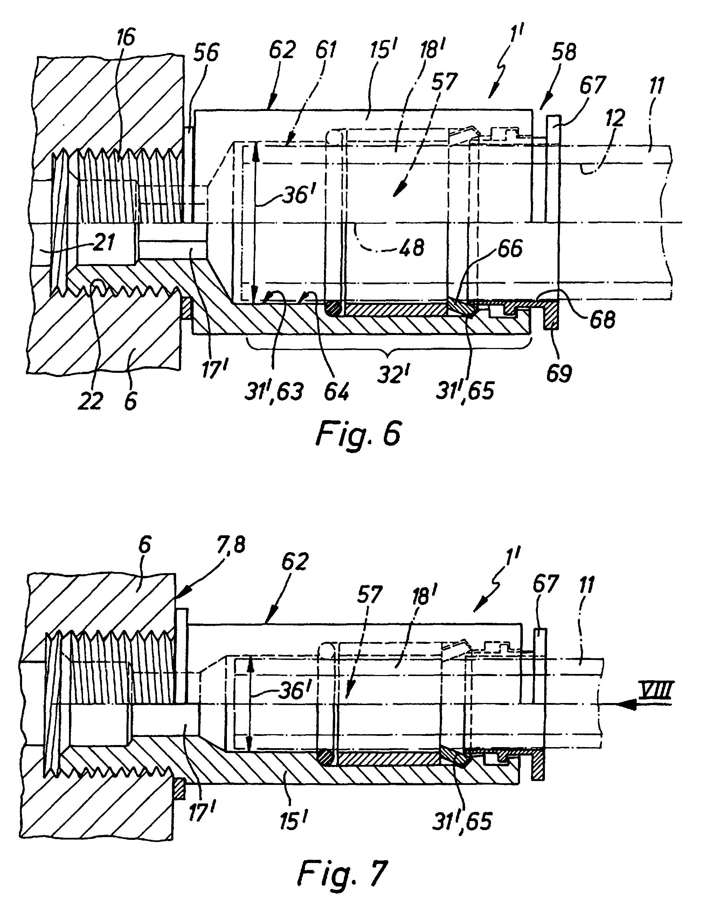

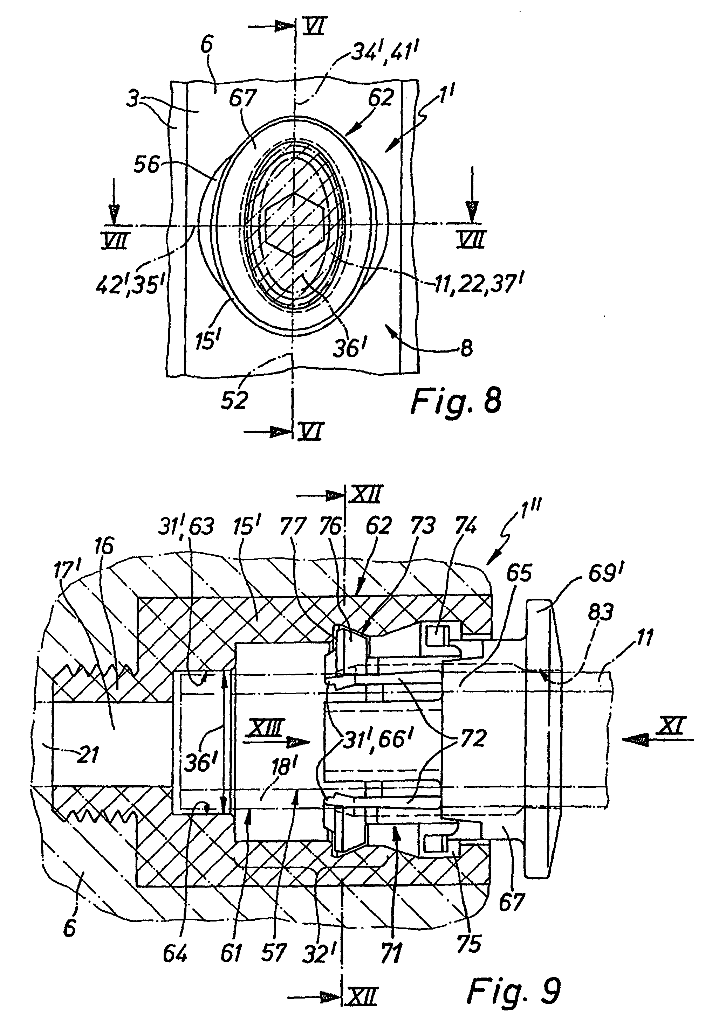

Die drei in Fig. 1 bis 5, in Fig. 6 bis 8 und in Fig. 9 bis 13 gezeigten Ausführungsbeispiele einer Steckverbindungseinrichtung 1, 1', 1'' können sämtliche bei einer Fluidverteilereinrichtung 2 der in Fig. 1 gezeigten Art verwendet werden. Einander entsprechende Bauteile sind mit identischen Bezugszeichen versehen worden.

Die in Fig. 1 gezeigte Fluidverteilereinrichtung 2 umfaßt mehrere in ihrer Gesamtheit jeweils plattenähnlich ausgeführte Verteilereinheiten 3, die mit zueinander parallelen Plattenebenen und mit einander zugewandten Seitenflächen stapelähnlich nebeneinander angeordnet sind, so daß sich eine batterieartige Einheit ergibt. Beidseits der batterieartigen Einheit ist jeweils noch ein Abschlußelement 4 angeordnet. Die Gesamtanordnung wird z.B. durch Zuganker 5 zusammengehalten.

Jede Verteilereinheit 3 umfaßt ein plattenähnliche Gestalt aufweisendes Gehäuse 6, wobei alle Gehäuse 6 mit einer Stirnseite 7 in die gleiche Richtung weisen. An diesen Stirnseiten 7 verfügt jedes Gehäuse 6 über eine beispielsgemäß rechteckähnlich konturierte längliche Außenfläche 8.

Jede Verteilereinheit 3 verfügt an der länglichen Außenfläche 8 über wenigstens eine und beim Ausführungsbeispiel über zwei Steckverbindungseinrichtungen 1, 1', 1''. Über diese können flexible und insbesondere gummielastische Schläuche 11 lösbar an die Verteilereinheiten 3 derart angeschlossen werden, daß der im jeweiligen Schlauch ausgebildete Schlauchkanal 12 mit einem nicht näher dargestellten Fluidkanal der zugeordneten Verteilereinheit 3 kommuniziert. Dies ermöglicht eine von den Verteilereinheiten 3 gesteuerte Fluidströmung von und zu Verbrauchern, die mit den entgegengesetzten Enden der Schläuche 11 verbunden sind. Bei den Verbrauchern kann es sich beispielsweise um fluidbetätigte Antriebseinrichtungen wie Pneumatikzylinder handeln.

Zur Steuerung des Fluides enthalten die Verteilereinheiten 3 jeweils wenigstens ein als Mehrwegeventil ausgebildetes Ventil 13, wobei die Ventile 13 integraler Bestandteil der Verteilereinheiten 3 sein können. Beim Ausführungsbeispiel ist jede Verteilereinheit 3 in einen Grundkörper 14 und ein auf dem Grundkörper 14 lösbar befestigtes Ventil 13 unterteilt, wobei die Steckverbindungseinrichtungen 1, 1', 1'' zweckmäßigerweise an den Grundkörpern 14 vorgesehen sind.

Nachfolgend sei der Aufbau der verschiedenen Ausführungsformen von Steckverbindungseinrichtungen 1, 1', 1'' näher erläutert.

Alle abgebildeten Steckverbindungseinrichtungen 1, 1', 1'' verfügen über ein Aufnahmeteil 15, 15', das zur steckbaren Aufnahme eines Schlauches 11 geeignet ist. Ferner ist in koaxialer Verlängerung zu dem Aufnahmeteil 15, 15' eine mit dieser verbundene Befestigungspartie 16 vorgesehen, über die die Steckverbindungseinrichtung 1, 1', 1'' am Gehäuse 6 der Fluidverteilereinrichtung 2 festlegbar ist.

Bei der Steckverbindungseinrichtung 1 gemäß Fig. 1 bis 5 ist das Aufnahmeteil 15 rohrähnlich ausgeführt und von einem koaxial angeordneten Strömungskanal 17 durchsetzt, der auch die Befestigungspartie 16 durchzieht.

Das Aufnahmeteil 15 ist als Einführteil ausgebildet, auf das ein anzuschließender Schlauch 11 mit einem Endabschnitt 18 koaxial aufsteckbar ist. Im aufgesteckten Zustand kommuniziert der Schlauchkanal 12 mit dem Strömungskanal 17, der seinerseits mit einem im Gehäuse 6 ausgebildeten Fluidkanal 21 kommuniziert. Die Befestigungspartie 16 ragt in den zur Außenfläche 8 ausmündenden Endabschnitt 22 des Fluidkanals 21 hinein und ist bezüglich des Gehäuses 6 unter Abdichtung festgelegt.

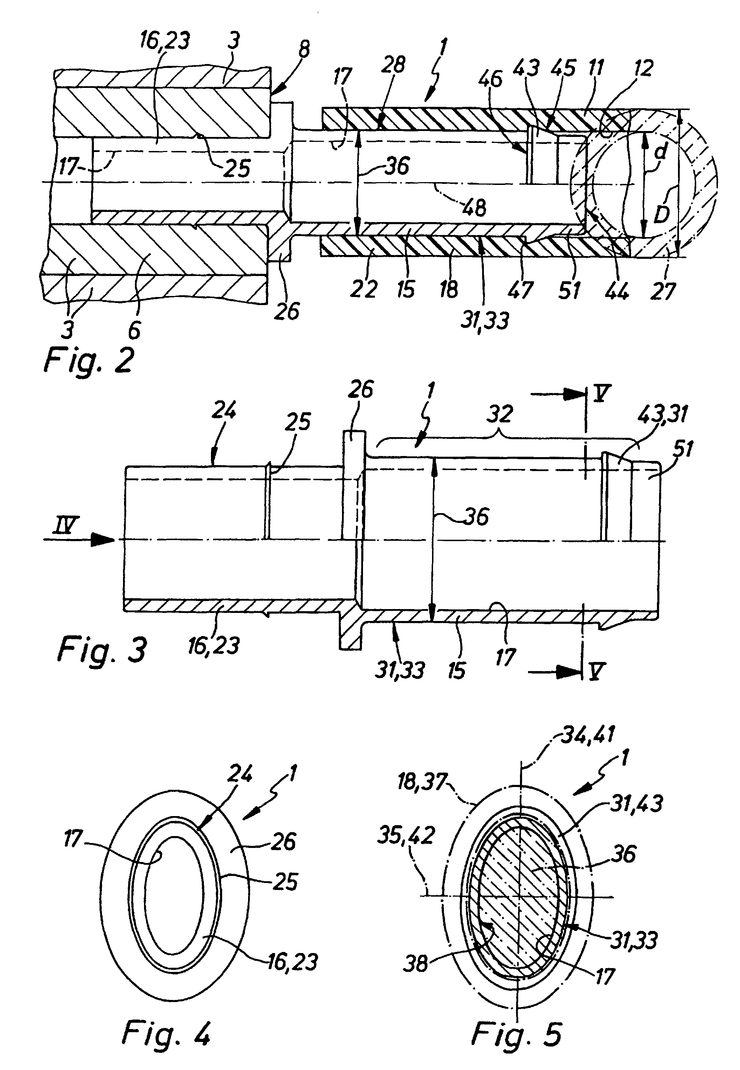

Bei der Steckverbindungseinrichtung 1 ist die Befestigungspartie 16 als Steckpartie 23 ausgeführt, die im Rahmen eines Steckvorganges in den vorerwähnten Endabschnitt 22 eingebracht ist, wobei sie insbesondere eingepreßt wurde, so daß eine Preßsitzbefestigung vorliegt. Den notwendigen Halt kann dabei insbesondere ein am Außenumfang 24 der Befestigungspartie 16 vorgesehener umlaufender und radial vorspringender Verankerungszahn 25 gewährleisten, der sich gemäß Fig. 2 in den Innenumfang des Endabschnittes 22 des Fluidkanals 21 eingraben kann. Es könnten auch mehrere Verankerungszähne 25 vorgesehen sein.

Ein axial zwischen dem Aufnahmeteil 15 und der Befestigungspartie 16 angeordneter Anschlagbund 26 begrenzt die Einpreßtiefe der Steckverbindungseinrichtung 1, indem er an der Außenfläche 8 zur Anlage gelangt. Bei Bedarf kann hier noch eine Dichtung zwischengefügt sein.

Wie aus Fig. 2 hervorgeht, haben die an die Steckverbindungseinrichtungen anzuschließenden Schläuche 11 vor dem Anschließen eine im Querschnitt kreisförmige Ausgangsgestalt 27. In der Ausgangsgestalt ist sowohl der Innenumfang als auch der Außenumfang des jeweiligen Schlauches 11 kreisförmig konturiert, so daß sich ein kreiszylindrisches Gebilde ergibt.

Nun sind jedoch am Außenumfang 28 des Aufnahmeteils 15 äußere Beaufschlagungsmittel 31 vorgesehen, die entlang einer sich axial erstreckenden Beaufschlagungszone 32 einen länglichen Beaufschlagungsquerschnitt definieren.

Beim Ausführungsbeispiel sind die äußeren Beaufschlagungsmittel 31 unmittelbar von der Außenumfangsfläche 33 des Aufnahmeteils 15 im Bereich der Beaufschlagungszone 32 gebildet, die im Querschnitt gesehen unkreisförmig länglich konturiert ist und beim Ausführungsbeispiel keine linearen Abschnitte hat, sondern stets mehr oder weniger stark gekrümmt ist.

Als weitere besonders zweckmäßige Möglichkeit zur Gestaltung des länglichen Beaufschlagungsquerschnittes wird eine Formgebung angesehen, bei der sich gegenüberliegende lineare Längsseiten vorgesehen sind, die an den Schmalseiten durch einen bogenförmigen Verlauf ineinander übergehen, so daß sich praktisch eine ovalähnliche Gestalt mit abgeflachten Längsseiten ergibt.

In Fig. 5 sind die in Längsrichtung des Beaufschlagungsquerschnittes verlaufende Hauptachse bei 34 und die rechtwinkelig hierzu verlaufende Nebenachse bei 35 angedeutet. Der von den äußeren Beaufschlagungsmitteln 31 definierte Beaufschlagungsquerschnitt ist durch eine strichpunktierte Schraffur bei 36 verdeutlicht.

Die in Richtung der Hauptachse 34 gemessenen Abmessungen des Beaufschlagungsquerschnittes 36 sind größer und seine in Richtung der Nebenachse 35 gemessenen Abmessungen sind geringer als der Innendurchmesser d des vom Durchmesser des Schlauchkanals 12 definierten Innendurchmessers d des Schlauches 11, wenn dieser die in Fig. 2 angedeutete Ausgangsgestalt aufweist.

Auf Grund der bei einem Schlauch vorhandenen Flexibilität und insbesondere auch Gummielastizität ist der Schlauch 11 in der Lage, in Durchmesserrichtung unter Veränderung seiner Querschnittsform verformt zu werden. Ist der Schlauch 11 auf das Aufnahmeteil 15 aufgesteckt, wird er an seinem sich über die Länge der Beaufschlagungszone 32 erstreckenden Endabschnitt 18 im Bereich seines Innenumfanges derart von den äußeren Beaufschlagungsmitteln 31 bzw. der Außenumfangsfläche 33 beaufschlagt, daß er sich hin zu einem länglichen Querschnitt verformt und der erwähnte Endabschnitt 18 eine im Querschnitt längliche verformte Gestalt einnimmt, die als Verformungsgestalt bezeichnet sei und in Fig. 5 strichpunktiert bei 37 ersichtlich ist.

Entsprechend der im vorliegenden Fall ovalen und insbesondere elliptischen Gestalt des Beaufschlagungsquerschnitts 36 erhält auch der Endabschnitt 18 eine entsprechend ovale bzw. elliptische Verformungsgestalt.

Es kommt hinzu, daß der die Steckverbindungseinrichtung 1 durchsetzende Strömungskanal 17 zumindest im Bereich der Beaufschlagungszone und zweckmäßigerweise zumindest über die gesamte in dem Aufnahmeteil 15 verlaufende Länge ebenfalls eine im Querschnitt längliche Innenkontur 38 hat, deren Hauptachse 41 mit derjenigen des Beaufschlagungsquerschnittes 36 zusammenfällt und deren Nebenachse 42 mit der Nebenachse 35 des Beaufschlagungsquerschnittes 36 zusammenfällt. Dadurch ergibt sich quasi eine Parallelausrichtung des Beaufschlagungsquerschnittes 36 und des Querschnittes des Strömungskanals 17. Das Aufnahmeteil 15 kann dabei entlang seines gesamten Umfanges eine zumindest im wesentlichen gleichbleibende Wanddicke aufweisen. Beim Ausführungsbeispiel ist der Querschnitt des Strömungskanals 17 in mathematischem Sinne ähnlich zum Beaufschlagungsquerschnitt 36 ausgeführt und hat eine ovale bzw. elliptische Gestalt mit im Vergleich zum Beaufschlagungsquerschnitt 36 lediglich kürzeren Haupt- und Nebenachsen.

Um den aufgesteckten Schlauch 11 sicher zu fixieren, kann das Aufnahmeteil 15 insbesondere im Bereich seines Außenumfanges 28 über wenigstens einen umlaufenden Haltevorsprung 43 verfügen, der in den Innenumfang des aufgesteckten Schlauches 11 eindrückt und eine Art formschlüssiger Verbindung herstellt, die einen erhöhten Widerstand gegen ein versehentliches Abziehen des Schlauches 11 erzeugt. Der Haltevorsprung 43 ist insbesondere zahnförmig ausgeführt und hat eine zur freien Stirnfläche 44 des Aufnahmeteils 15 weisende, in entgegengesetzte Richtung leicht ansteigende vordere Flanke 45, die in eine zum Außenumfang 28 hin steil abfallende und insbesondere rechtwinkelig zum Außenumfang 28 verlaufende hintere Flanke 46 übergeht, so daß sich im Übergangsbereich zwischen den beiden Flanken 45, 46 eine verhältnismäßig scharfe umlaufende Kante 47 ergibt, die sich in die Wandung des Schlauches 11 eingraben kann.

Der Haltevorsprung 43 gehört beim Ausführungsbeispiel zu den äußeren Beaufschlagungsmitteln 31 und hat dementsprechend, in Richtung der Längsachse 48 des Aufnahmeteils 15 gesehen, einen unrunden länglichen und beim Ausführungsbeispiel ovalen Verlauf.

Um das Aufstecken des Schlauches 11 auf das Aufnahmeteil 15 zu erleichtern, kann letzteres im Anschluß an die freie Stirnfläche 44 einen Einführabschnitt 51 von geringer axialer Länge aufweisen, in dessen Bereich die Außenmaße des Aufnahmeteils 15 etwas geringer sind als im Bereich der Beaufschlagungszone 32, die sich mit dem Haltevorsprung 43 an den Einführabschnitt 51 anschließt.

Zweckmäßigerweise hat die Steckverbindungseinrichtung 1 auch im Bereich der Befestigungspartie 16 einen unkreisförmigen Querschnitt und kann wie abgebildet sowohl am Außenumfang 24 als auch an dem vom Strömungskanal 17 definierten Innenumfang im Querschnitt gesehen länglich und vorzugsweise oval oder elliptisch konturiert sein. Indem der Endabschnitt 22 des Schlauchkanals 21 komplementär hierzu gestaltet ist, ergibt sich bei der Montage der Steckverbindungseinrichtung 1 am Gehäuse 6 automatisch eine bestimmte winkelmäßige Ausrichtung bezüglich der Längsachse 48. Diese ist zweckmäßigerweise so gewählt, daß die Hauptachse 34 des Beaufschlagungsquerschnittes 36 parallel zur Längsachse 52 der länglichen Außenfläche 8 des Gehäuses 6 verläuft, an dem die Steckverbindungseinrichtung 1 festgelegt ist. Dies hat gleichzeitig zur Folge, daß die Nebenachse 35 des Beaufschlagungsquerschnittes 36 in Breitenrichtung der betreffenden Außenfläche 8 verläuft und es somit möglich ist, die Außenfläche 8 und somit die gesamte Gehäusebreite 6 verhältnismäßig schmal auszuführen, ohne daß die Steckverbindungseinrichtung 1 mit dem daran festgelegten Schlauch seitlich übersteht. Dies gestattet wiederum in vorteilhafter Weise eine kompakte batterieartige Anordnung von Verteilereinheiten 3 in einer Fluidverteilereinrichtung 2, wie sie beispielhaft in Fig. 1 gezeigt ist.

Bei der Fluidverteilereinrichtung 2 sind die einer jeweiligen Verteilereinheit 3 zugeordneten Steckverbindungseinrichtungen 1 so angeordnet, daß sich insgesamt zwei in Fig. 1 durch strichpunktierte Linien angedeutete Reihen 53, 53' von Steckverbindungseinrichtungen 1 ergeben, deren durch Doppelpfeile angedeuteten Reihenrichtungen 54 in Breitenrichtung der Außenflächen 8 und somit in durch Doppelpfeil 55 angedeuteter Aufreihrichtung der Verteilereinheiten 3 verlaufen. Somit erstrecken sich die Hauptachsen 34 der Beaufschlagungsquerschnitte 36 sämtlicher Steckverbindungseinrichtungen 1 rechtwinkelig zur zugeordneten Reihenrichtung 54, so daß die Steckverbindungseinrichtungen 1 mit parallel zu den Reihenrichtungen 54 ausgerichteten kürzeren Nebenachsen 35 nebeneinander liegen, ohne sich gegenseitig zu behindern. Dadurch sind in Reihenrichtung 54 besonders kompakte Abmessungen der Fluidverteilereinrichtung 52 möglich, ohne durch die Abmessungen der Steckverbindungseinrichtungen 1 behindert zu werden. Da gleichzeitig die Strömungskanäle 17 eine ebenfalls längliche Querschnittskontur haben, geht die kompakte Anordnung nicht zu Lasten der Durchflußwerte. Der in der einen Richtung schmälere Durchmesser des jeweiligen Strömungskanals wird durch den in der anderen Richtung vergrößerten Durchmesser ausgeglichen, so daß im Vergleich zu einer konventionellen Steckverbindungseinrichtung, bei der der Schlauch unter Beibehaltung der kreisförmigen Gestalt fixiert wird, keine nachteilige Verringerung des Strömungsquerschnittes in Kauf genommen werden muß.

Die Steckverbindungseinrichtungen 1', 1'' der Fig. 6 bis 13 unterscheiden sich von der zuvor beschriebenen zunächst in der Ausgestaltung der Befestigungspartie 16. Diese ist hier nicht als Steckpartie, sondern als Gewindepartie ausgeführt, welche axial über das zugeordnete Aufnahmeteil 15' hinausragt und ein Außengewinde besitzt. Dementsprechend ist der Endabschnitt 22 des im zugeordneten Gehäuse 6 ausgebildeten Fluidkanals 21 mit einem komplementären Innengewinde versehen, das ein Einschrauben der Befestigungspartie 16 ermöglicht. Zwischen die Außenfläche 8 und das Aufnahmeteil 15' wird zweckmäßigerweise noch ein Dichtungsring 56 zwischengefügt.

Die Steckverbindungseinrichtungen 1', 1'' können durch Schraubmontage an der in Fig. 1 dargestellten Fluidverteilereinrichtung 2 anstelle der Steckverbindungseinrichtungen 1 angebracht werden, wozu lediglich die Endabschnitte 22 der Fluidkanäle 21 entsprechend angepaßt werden müssen. Auch eine Bajonettverbindung wäre möglich.

Ein weiterer Unterschied zur Steckverbindungseinrichtung 1 der Fig. 1 bis 5 liegt darin, daß der anzuschließende Schlauch 11 auf das Aufnahmeteil 15' nicht aufgesteckt, sondern in dieses eingesteckt wird. Daher verfügt das Aufnahmeteil 15' im Innern über eine sich axial erstreckende Ausnehmung 57, die zu der von der Befestigungspartie 16 abgewandten freien Stirnseite 58 hin offen ist und deren entgegengesetztes axiales Ende mit einem Strömungskanal 17' kommuniziert, der die Befestigungspartie 16 koaxial durchsetzt. Bei in die Ausnehmung 57 eingestecktem Schlauch 11 kommuniziert dessen Schlauchkanal 12 mit dem Strömungskanal 17' und über diesen mit dem in der Fluidverteilereinrichtung 2 ausgebildeten Fluidkanal 21.

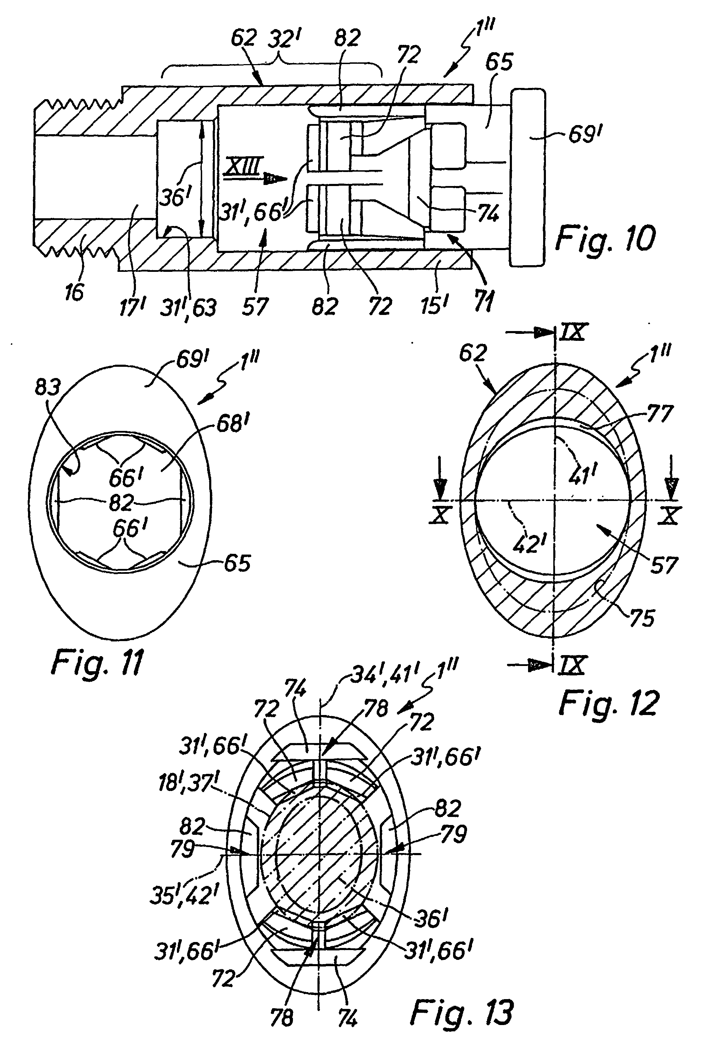

Im Innern der Ausnehmung 57 sind innere Beaufschlagungsmittel 31 vorgesehen, die jeweils einen länglichen Beaufschlagungsquerschnitt 36' definieren, der in Fig. 8 und 13 jeweils durch eine strichpunktierte Schraffur verdeutlicht ist. Die Abmessungen des Beaufschlagungsquerschnittes 36' sind in Richtung seiner Hauptachse 34' größer und in Richtung der hierzu rechtwinkeligen Nebenachse 35' geringer als der Außendurchmesser D (vgl. Fig. 2) des Ausgangsgestalt aufweisenden Schlauches 11 vor dem Einstecken.

Im eingesteckten Zustand wird der Schlauch 11 derart von den inneren Beaufschlagungsmitteln 31' am Außenumfang 61 beaufschlagt, daß sein im Aufnahmeteil 15' angeordneter Endabschnitt 18' eine Verformungsgestalt einnimmt, die wie auch schon beim Ausführungsbeispiel der Fig. 1 bis 5 unrund und im Querschnitt länglich ist. Gut ersichtlich ist dies insbesondere aus Fig. 8 und 13, in denen der eingesteckte Endabschnitt 22 des Schlauches 11 strichpunktiert bei 37' angedeutet ist.

Die Verformungsgestalt als solches kann derjenigen entsprechen, wie sie bereits im Zusammenhang mit der Steckverbindungseinrichtung 1 gemäß Fig. 1 bis 5 erläutert wurde. Beim Ausführungsbeispiel liegt wiederum eine ovale Querschnittsgestaltung vor, wobei die Steckverbindungseinrichtung 1' eine etwas länglichere Form verleiht als die Steckverbindungseinrichtung 1''.

Der Beaufschlagungsquerschnitt 36' erstreckt sich in der Ausnehmung 57 axial entlang einer Beaufschlagungszone 32', die sich beim Ausführungsbeispiel der Fig. 6 bis 8 zumindest annähernd über die gesamte Länge der Ausnehmung 57 erstreckt, im Falle der Bauform gemäß Fig. 9 bis 13 allerdings eine kürzere Baulänge aufweist. Auch wird beim erstgenannten Ausführungsbeispiel der Verformungsgestalt 37' aufweisende Endabschnitt 22 des Schlauches 11 über seine gesamte Länge von den Beaufschlagungsmitteln 11 beaufschlagt, während im Falle der Fig. 9 bis 13 lediglich einige mit Abstand aufeinanderfolgende Längenabschnitte des Endabschnittes 22 unter der unmittelbaren Einwirkung von Beaufschlagungsmitteln 31 stehen. Gemeinsam ist wiederum beiden Ausführungsformen, daß das Aufnahmeteil 15' zumindest im Bereich der Beaufschlagungszone 32' und zweckmäßigerweise über seine gesamte Baulänge eine im Querschnitt längliche Außenkontur 62 aufweist, die in Fig. 8 und 12 besonders gut zur Geltung kommt. Sie ist beim Ausführungsbeispiel entsprechend der Formgebung des Beaufschlagungsquerschnittes 36 oval ausgeführt. Die durch die Hauptscheitel gehende Hauptachse der länglichen Außenkontur ist bei 41', die durch die Nebenscheitel gehende Nebenachse bei 42' angedeutet.

Um in einer Vorzugsrichtung wiederum besonders kompakte Querabmessungen zu erhalten, sind die längliche Außenkontur 62 und der Beaufschlagungsquerschnitt 36' derart relativ zueinander angeordnet, daß einerseits ihre Hauptachsen 34', 41' und andererseits ihre Nebenachsen 35', 42' zusammenfallen.

Bei beiden Steckverbindungseinrichtungen 1', 1'' wird die Beaufschlagungszone 32' über einen Teil ihrer Länge von der Innenumfangsfläche 63 der Ausnehmung 57 definiert. Die Innenumfangsfläche 63 ist somit Bestandteil der Beaufschlagungsmittel 31' und begrenzt unmittelbar den Beaufschlagungsquerschnitt 36'.

Bei entsprechender Ausgestaltung des Aufnahmeteils 15' könnte die Innenumfangsfläche 63 über die gesamte Länge der Ausnehmung 57 hinweg zu den Beaufschlagungsmitteln gehören. Bei den Ausführungsbeispielen der Fig. 6 bis 13 handelt es sich jeweils nur um eine Teillänge, und zwar insbesondere in dem der freien Stirnseite 58 axial entgegengesetzten Endbereich der Ausnehmung 57. Dadurch bildet die Ausnehmung 57 für den Endbereich des eingesteckten Endabschnittes 22 des Schlauches 11 einen Lagerabschnitt 64.

Bei den Steckverbindungseinrichtungen 1', 1'' ist in der Ausnehmung 57 jeweils noch ein den eingesteckten Schlauch 11 umschließender Haltekörper 65 angeordnet, der den Schlauch 11 gegen versehentliches Herausziehen sichert. Er ist beim Ausführungsbeispiel der Fig. 6 bis 8 von einem ringähnlichen Körper gebildet, der eine ringförmige Haltepartie 66 definiert, die unter radialer Vorspannung am Außenumfang 61 des Endabschnittes 22 anliegt. Zweckmäßigerweise handelt es sich um ein federndes Teil, das hohlkegelähnlich gestaltet ist, wobei allerdings die ringförmige Haltepartie 66 wiederum einen länglichen Querschnitt umschließt, der den Beaufschlagungsquerschnitt 36' vorgibt. Somit gehört hier der Haltekörper 65 auch zu den dem eingesteckten Endabschnitt 22 die Verformungsgestalt auferlegenden inneren Beaufschlagungsmitteln 31'.

Innerhalb der Ausnehmung 57 kann insbesondere axial außerhalb des Haltekörpers 65 noch ein ringähnlicher Lösekörper 67 vorgesehen sein, der relativ zum Aufnahmeteil 15' axial verschiebbar ist. Er läßt sich durch manuelle Beaufschlagung axial in Richtung des Haltekörpers 65 verlagern, wobei er auf diesen einwirkt, so daß die Haltepartie 66 entgegen der federnden Vorspannung vom Schlauchumfang abgehoben wird und der Schlauch 11 herausgezogen werden kann.

Der außerhalb der Ausnehmung 57 liegende Betätigungsabschnitt 69 hat zweckmäßigerweise eine unrunde längliche Außenkontur, die die Außenkontur 62 des Aufnahmeteils 15' radial nicht überragt. Außerdem ist die vom eingesteckten Schlauch 11 durchsetzte Durchbrechung 68 des ringförmigen Lösekörpers 67 zweckmäßigerweise entsprechend dem Beaufschlagungsquerschnitt 36' konturiert, wobei allerdings die Querschnittsfläche auch geringfügig größer ausgeführt sein kann, um das Einfädeln des Schlauches 11 zu erleichtern.

Bei der Steckverbindungseinrichtung 1'' ist ein insbesondere aus Kunststoffmaterial bestehender ringförmiger Haltekörper 65 vorgesehen, der eine innerhalb der Ausnehmung 57 liegende Spannzange 71 umfaßt. Außerdem enthält er einen außerhalb der Ausnehmung 57 befindlichen Betätigungsabschnitt 69', der mit der Spannzange 71 einstückig ausgebildet sein kann.

Die Spannzange 71 verfügt über mehrere entlang dem Umfang der Ausnehmung 57 verteilt angeordnete Spannarme 72, die radial zwischen dem Innenumfang der Ausnehmung 57 und dem Außenumfang 61 des eingesteckten Endabschnittes 22 des Schlauches 11 liegen.

Die Spannarme 72 sind radial beweglich und weisen radial innen jeweils eine insbesondere scharfkantig ausgeführte Haltepartie 66' auf. Sie liegen unter Vorspannung am Außenumfang des eingesteckten Schlauches 11 an, wobei sie sich mit nach radial außen weisenden Beaufschlagungsflächen 73 auf Aufnahmeteil 15' abstützen können, um eine hohe Klemmkraft zu erzielen.

Am Haltekörper 65 vorgesehene Sicherungsmittel 74 können in eine Sicherungsnut 75 am Innenumfang der Ausnehmung 57 eingreifen, um auch bei starken Zugkräften ein Herausreißen des Haltekörpers 65 aus der Ausnehmung 57 zu verhindern.

Beim Ausführungsbeispiel der Fig. 9 bis 13 ist der Lösekörper 67 integraler Bestandteil des Haltekörpers 65. Wird auf den Betätigungsabschnitt 69' Druck ausgeübt, verschiebt sich der Haltekörper 65 insgesamt axial nach innen, wobei an den Spannarmen 72 vorgesehene und mit den Haltepartien 66 verbundene Vorsprünge 76 gegen eine am Innenumfang der Ausnehmung 57 ausgebildete Anschlagfläche 77 gedrückt werden, so daß die Haltepartien 66 radial nach außen schwenken und den Klammergriff um den Schlauch 11, dessen Herausziehen ermöglichend, lösen.

Auch bei der Steckverbindungseinrichtung 1'' der Fig. 9 bis 13 gehören die Haltepartien 66' zu den Beaufschlagungsmitteln 31'. Um eine kompakte Bauweise zu erhalten, sind die Haltepartien 66 allerdings nur im Bereich der beiden Hauptscheitel 78 des Beaufschlagungsquerschnittes 36' angeordnet, was aus Fig. 13 ersichtlich ist. Im Bereich der Nebenscheitel 79 sind entsprechende Haltepartien nicht vorgesehen, so daß der Haltekörper 65 in Richtung der Nebenachse nur wenig Platz beansprucht. Gleichwohl können auch im Bereich der Nebenscheitel 79 mit dem Haltekörper 65 verbundene Abstützpartien 82 vorgesehen sein, die gemeinsam mit den Haltepartien 66 der Spannarme 72 den Beaufschlagungsquerschnitt 36' definieren. Es kann sich bei den Abstützpartien 82 um flachbauende Arme handeln, die ausgehend vom Betätigungsabschnitt 69' vergleichbar den Spannarmen 72 axial nach innen in die Ausnehmung 57 ragen.

Durch die eben geschilderte Ausführungsform des Haltekörpers 65 lassen sich in Verbindung mit der längliche Querschnittskontur aufweisenden Verformungsgestalt im Vergleich zu üblichen Haltekörpern mit auf einer Kreislinie angeordneten Haltepartien in einer Querrichtung besonders schmale Abmessungen realisieren. Da in Richtung der Hauptachse 34' ausreichend Einbauraum vorhanden ist, können hier bequem die Haltepartien 66 plaziert werden. Auch die Sicherungsmittel 74 befinden sich zweckmäßigerweise in diesem Bereich.

Infolge dieser Anordnung ist es durchaus möglich, den im Betätigungsabschnitt 69' ausgebildeten Eingangsabschnitt 83 der den Haltekörper 65 durchsetzenden Durchbrechung 68' kreisrund mit einem dem Außendurchmesser des unverformten Schlauches 11 entsprechenden Durchmesser auszuführen. Das Einfädeln des Schlauches 11 wird dadurch erleichtert, und es ist nicht erforderlich, das Schlauchende zum Einfädeln mit der Hand zusammenzudrücken. Mit zunehmender Einstecktiefe nimmt der Schlauch 11 dann bedingt durch die Beaufschlagung durch die Haltepartien 66' und die Abstützpartien 62 die Verformungsgestalt ein, die dadurch noch zusätzlich stabilisiert wird, daß das Schlauchende in den Lagerabschnitt 64 eintaucht. Obwohl somit der Endabschnitt 22 des Schlauches 11 innerhalb der Ausnehmung 57 nicht über seine gesamte Länge unter dem unmittelbaren Einfluß von Beaufschlagungsmitteln 31' steht - die Haltepartien 66' und Abstützpartien 82 sind axial beabstandet zu dem Lagerabschnitt 64 angeordnet -, ist der Endabschnitt 22 doch über seine gesamte Länge verformt.

Wie schon bei der Steckverbindungseinrichtung 1' der Fig. 6 bis 8 verfügt auch vorliegend der Haltekörper 65 zweckmäßigerweise über eine unkreisförmige Außenkontur mit länglichem Querschnitt, wobei der Betätigungsabschnitt 69' so gestaltet ist, daß er die Außenkontur 62 des Aufnahmeteils 15' nicht radial überragt.

Es ist noch zu erwähnen, daß insbesondere bei einer Steckverbindungseinrichtung, bei der der anzuschließende Schlauch 11 in eine Ausnehmung eingesteckt wird, das Aufnahmeteil 15' kein separates Bauteil sein muß, sondern unmittelbar von einem Gehäuse der Fluidverteilereinrichtung 2 gebildet sein kann. Eine entsprechende Ausführungsvariante ist in Fig. 9 dadurch illustriert, daß durch eine strichpunktierte Schraffur eines der Gehäuse 6 der Fluidverteilereinrichtung 2 angedeutet ist, das in diesem Falle unmittelbar die Ausnehmung 57 definiert. Um weiterhin in der Querrichtung der Außenfläche 8 bzw. in der Reihenrichtung 54 schmale Abmessungen zu erhalten, wird die Ausnehmung 57 so im Gehäuse 6 plaziert, daß die Hauptachse des sich ergebenden Beaufschlagungsquerschnittes 36' in Längsrichtung 52 der . Außenfläche 8 verläuft und die Nebenachse in Breitenrichtung bzw. in der Reihenrichtung 54 ausgerichtet ist.

## Patentansprüche

1. Steckverbindungseinrichtung zum Anschließen eines im Querschnitt eine kreisförmige Ausgangsgestalt aufweisenden Schlauches (11), mit einem einen Strömungskanal (17') enthaltenden Aufnahmeteil (15'), das innen eine mit dem Strömungskanal (17') kommunizierende Ausnehmung (57) enthält, in die der anzuschließende Schlauch (11) einsteckbar ist und in der innere Beaufschlagungsmittel (31') vorgesehen sind, die in wenigstens einer Beaufschlagungszone (32') einen länglichen, oval oder elliptisch konturierten Beaufschlagungsquerschnitt (36') definieren, dessen Abmessungen in Richtung der Hauptachse (34') größer und in Richtung der hierzu rechtwinkeligen Nebenachse (35') geringer sind als der Außendurchmesser (D) des Ausgangsgestalt aufweisenden Schlauches (11) , wobei die inneren Beaufschlagungsmittel (31') den eingesteckten Schlauch (11) am Außenumfang so beaufschlagen, daß sein Endabschnitt (22) eine im Querschnitt längliche Verformungsgestalt (37') einnimmt, **dadurch gekennzeichnet, daß** das Aufnahmeteil (15') zumindest im Bereich der Bereich Beaufschlagungszone (32') eine im Querschnitt längliche, oval oder elliptisch gestaltete Außenkontur (62) aufweist, deren Hauptachse (41') mit derjenigen (34') des Beaufschlagungsquerschnittes (36') zusammenfällt.

2. Steckverbindungseinrichtung nach Anspruch 1, **dadurch gekennzeichnet, daß** in der Ausnehmung (57) ein den eingesteckten Schlauch (11) umschließender Haltekörper (65) angeordnet ist, der eine oder mehrere unter federnder Vorspannung auf den Außenumfang des Schlauches (11) einwirkende Haltepartien (66, 66') aufweist.

3. Steckverbindungseinrichtung nach Anspruch 2, **dadurch gekennzeichnet, daß** der Haltekörper (65) eine Spannzange (71) umfaßt, die über radial bewegliche Spannelemente (72) verfügt, an denen die Haltepartien (66') vorgesehen sind.

4. Steckverbindungseinrichtung nach Anspruch 3, **dadurch gekennzeichnet, daß** Haltepartien (66') lediglich im Bereich der beiden Hauptscheitel (78) des Beaufschlagungsquerschnittes (36') angeordnet sind.

5. Steckverbindungseinrichtung nach einem der Ansprüche 2 bis 4, **dadurch gekennzeichnet, daß** ein ringähnlicher Lösekörper (67) vorgesehen ist, mit dem sich die Haltepartien (66, 66') zum Entfernen des Schlauches (11) von dessen Außenumfang abheben lassen.

6. Steckverbindungseinrichtung nach einem der Ansprüche 2 bis 5, **dadurch gekennzeichnet, daß** der Haltekörper (65) zu den dem eingesteckten Schlauch (11) die Verformungsgestalt (37') auferlegenden Beaufschlagungsmitteln (31) gehört.

7. Steckverbindungseinrichtung nach einem der Ansprüche 1 bis 6, **dadurch gekennzeichnet, daß** die Beaufschlagungszone (32') über wenigstens einen Teil ihrer Länge von der zu den Beaufschlagungsmitteln (31') gehörenden Innenumfangsfläche (63) der Ausnehmung (57) definiert ist.

8. Steckverbindungseinrichtung nach einem der Ansprüche 1 bis 7, **dadurch gekennzeichnet, daß** die Außenkontur (62) des Aufnahmeteils (15') dem Beaufschlagungsquerschnitt (36') entsprechend unrund gestaltet ist.

9. Steckverbindungseinrichtung zum Anschließen eines im Querschnitt eine kreisförmige Ausgangsgestalt aufweisenden Schlauches (11), mit einem einen Strömungskanal (17) enthaltenden rohrähnlichen Aufnahmeteil (15), auf das der anzuschließende Schlauch (11) aufsteckbar ist und an dessen Außenumfang (28) äußere Beaufschlagungsmittel (31) vorgesehen sind, sind, die in wenigstens einer Beaufschlagungszone (32) einen länglichen, oval oder elliptisch konturierten Beaufschlagungsquerschnitt (36) definieren, dessen Abmessungen in Richtung der Hauptachse (34) größer und in Richtung der hierzu rechtwinkeligen Nebenachse (35) geringer sind als der Innendurchmesser (d) des Ausgangsgestalt aufweisenden Schlauches (11), **dadurch gekennzeichnet, daß** der Strömungskanal (17) zumindest im Bereich der Beaufschlagungszone (32) eine im Querschnitt längliche, oval oder elliptisch gestaltete Innenkontur (38) aufweist, deren Hauptachse (41) mit derjenigen (34) des Beaufschlagungsquerschnittes (36) zusammenfällt, wobei die äußeren Beaufschlagungsmittel (31) den aufgesteckten Schlauch (11) am Innenumfang so beaufschlagen, daß sein Endabschnitt (22) eine im Querschnitt längliche Verformungsgestalt (37) einnimmt.

10. Steckverbindungseinrichtung nach Anspruch 9, **dadurch gekennzeichnet, daß** die Beaufschlagungszone (32) über wenigstens einen Teil ihrer Länge von der zu den Beaufschlagungsmitteln (31) gehörenden Außenumfangsfläche (28) des Aufnahmeteils (15) definiert ist.

11. Steckverbindungseinrichtung nach Anspruch 9 oder 10, **dadurch gekennzeichnet, daß** am Außenumfang des Aufnahmeteils (15) wenigstens ein umlaufender Haltevorsprung (43) angeordnet ist, der am Innenumfang des aufgesteckten Schlauches (11) angreift.

12. Steckverbindungseinrichtung nach einem der Ansprüche 9 bis 11, **dadurch gekennzeichnet, daß** das Aufnahmeteil (15) entlang seines gesamten Umfanges eine zumindest im wesentlichen gleichbleibende Wanddicke aufweist.

13. Steckverbindungseinrichtung nach einem der Ansprüche 9 bis 12, **dadurch gekennzeichnet, daß** die Innenkontur des Aufnahmeteils (15) dem Beaufschlagungsquerschnitt (36) entsprechend unrund gestaltet ist.

14. Mit wenigstens einer Steckverbindungseinrichtung ausgestattete Fluidverteilereinrichtung, die über wenigstens ein Gehäuse (6) verfügt, das im Bereich wenigstens einer länglichen Außenfläche (8) mindestens eine zum Anschließen eines im Querschnitt eine kreisförmige Ausgangsgestalt aufweisenden Schlauches dienende und gemäß einem der Ansprüche 1 bis 13 ausgebildete Steckverbindungseinrichtung (1, 1', 1'') aufweist, deren Beaufschlagungsquerschnitt (36, 36') so angeordnet ist, daß seine Hauptachse (34) parallel zur Längsachse (52) der zugeordneten Außenfläche (8) des Gehäuses (6) verläuft.

15. Fluidverteilereinrichtung nach Anspruch 14, **dadurch gekennzeichnet, daß** das Aufnahmeteil der mindestens einen Steckverbindungseinrichtung (1, 1', 1") unmittelbar von dem wenigstens einen Gehäuse (6) gebildet ist.

16. Fluidverteilereinrichtung nach Anspruch 14, **dadurch gekennzeichnet, daß** das Aufnahmeteil (15, 15') der mindestens einen Steckverbindungseinrichtung (1, 1', 1") mit einer Befestigungspartie (16) verbunden ist, die an dem Gehäuse (6) festlegbar ist.

17. Fluidverteilereinrichtung nach Anspruch 16, **dadurch gekennzeichnet, daß** die Befestigungspartie (16) in das mindestens eine Gehäuse (6) eingepreßt ist.

18. Mit einer Mehrzahl von Steckverbindungseinrichtungen ausgestattete Fluidverteilereinrichtung, bei der mehrere zum Anschließen von im Querschnitt eine kreisförmige Ausgangsgestalt aufweisenden Schläuchen (11) dienende und gemäß einem der Ansprüche 1 bis 13 ausgebildete Steckverbindungseinrichtungen (1, 1', 1'') in wenigstens einer Reihe (53) aufeinanderfolgend angeordnet sind, wobei die Beaufschlagungsquerschnitte (36, 36') so angeordnet sind, daß ihre Hauptachsen (34, 34') rechtwinkelig zur Reihenrichtung (54) der jeweils zugeordneten Reihe (53) von Steckverbindungseinrichtungen (1, 1', 1'') verlaufen.

19. Fluidverteilereinrichtung nach Anspruch 18, **dadurch gekennzeichnet, daß** sie mehrere mit einander zugewandten Seitenflächen nebeneinander angeordnete und zu einer batterieartigen Einheit zusammengefaßte Verteilereinheiten (3) aufweist, die an zur gleichen Richtung weisenden Stirnseiten jeweils mindestens eine Steckverbindungseinrichtung (1, 1', 1'') aufweisen, wobei diese Steckverbindungseinrichtungen (1, 1', 1'') der benachbarten Verteilereinheiten (3) in wenigstens einer Reihe (53) aufeinanderfolgend angeordnet sind.

## Claims

1. Plug-in connecting device for connecting a hose (11) with an initially circular cross-section, comprising a locating part (15') containing a flow passage (17') and provided internally with a recess (57) communicating with said flow passage (17'), into which the hose (11) to be connected can be plugged and which incorporates internal pressurisation means (31') defining in at least one pressurisation zone (32') an oblong, oval or elliptical pressurisation cross-section (36') with dimensions larger in the direction of the main axis (34') and smaller in the direction of the secondary axis (35') lying at right angles thereto than the external diameter (D) of the hose (11) in its initial shape, the internal pressurisation means (31') so pressurising the outer circumference of the plugged-in hose (11) that its end section (22) adopts an oblong deformed shape (37'), **characterised in that** the locating part (15') has, at least in the area of the pressurisation zone (32'), an external contour (62) with an oblong, oval or elliptical cross-section, the main axis (41') of which coincides with that (34') of the pressurisation cross-section (36').

2. Plug-in connecting device according to claim 1, **characterised in that** a retaining body (65) enclosing the plugged-in hose (11) and incorporating one or more retaining sections (66, 66') acting on the outer circumference of the hose (11) under spring bias is installed in the recess (57).

3. Plug-in connecting device according to claim 2, **characterised in that** the retaining body (65) comprises a collet (71) with radially movable clamping elements (72) on which the retaining sections (66') are arranged.

4. Plug-in connecting device according to claim 3, **characterised in that** the retaining sections (66') are confined to the area of the two main apices (78) of the pressurisation cross-section (36').

5. Plug-in connecting device according to any of claims 2 to 4, **characterised in that** an annular release body (67) is provided to lift the retaining sections (66, 66') off the outer circumference of the hose (11) for its removal.

6. Plug-in connecting device according to any of claims 2 to 5, **characterised in that** the retaining body (65) is part of the pressurisation means (31) imposing the deformed shape (37') on the plugged-in hose (11).

7. Plug-in connecting device according to any of claims 1 to 6, **characterised in that** the pressurisation zone (32') is, at least over part of its length, defined by the inner circumferential surface (63) of the recess (57) forming part of the pressurisation means (31').

8. Plug-in connecting device according to any of claims 1 to 7, **characterised in that** the external contour (62) of the locating part (15') is non-circular to match the pressurisation cross-section (36').

9. Plug-in connecting device for connecting a hose (11) with an initially circular cross-section, comprising a tubular locating part (15) containing a flow passage (17) onto which the hose (11) to be connected can be plugged and which incorporates external pressurisation means (31) on its outer circumference (28) defining in at least one pressurisation zone (32) an oblong, oval or elliptical pressurisation cross-section (36) with dimensions larger in the direction of the main axis (34) and smaller in the direction of the secondary axis (35) lying at right angles thereto than the internal diameter (d) of the hose (11), **characterised in that** the flow passage (17) has, at least in the area of the pressurisation zone (32), an internal contour (38) with an oblong, oval or elliptical cross-section, the main axis (41) of which coincides with that (34) of the pressurisation cross-section (36), the external pressurisation means (31) so pressurising the inner circumference of the plugged-on hose (11) that its end section (22) adopts an oblong deformed shape (37).

10. Plug-in connecting device according to claim 9, **characterised in that** the pressurisation zone (32) is, at least over part of its length, defined by the outer circumferential surface (28) of the locating part (15) forming part of the pressurisation means (31).

11. Plug-in connecting device according to claim 9 or 10, **characterised in that** the outer circumference of the locating part (15) is provided with at least one continuous retaining projection (43) acting on the inner circumference of the plugged-on hose (11).

12. Plug-in connecting device according to any of claims 9 to 11, **characterised in that** the locating part (15) has an at least substantially equal wall thickness along its entire circumference.

13. Plug-in connecting device according to any of claims 9 to 12, **characterised in that** the internal contour of the locating part (15) is non-circular to match the pressurisation cross-section (36).

14. Fluid manifold device incorporating at least one plug-in connecting device, with at least one housing (6) provided, in the area of at least one oblong outer surface (8), with at least one plug-in connecting device (1, 1' 1") according to any of claims 1 to 13 for connecting a hose with an initially circular cross-section, its pressurisation cross-section (36, 36') being so arranged that its main axis (34) lies parallel to the longitudinal axis (52) of the associated outer surface (8) of the housing (6).

15. Fluid manifold device according to claim 14, **characterised in that** the locating part of the at least one plug-in connecting device (1, 1', 1") is directly represented by the at least one housing (6).

16. Fluid manifold device according to claim 14, **characterised in that** the locating part (15, 15') of the at least one plug-in connecting device (1, 1', 1") is connected to a retaining section (1.6) which can be located on the housing (6).

17. Fluid manifold device according to claim 16, **characterised in that** the retaining section (16) is pressed into the at least one housing (6).

18. Fluid manifold device incorporating a plurality of plug-in connecting devices, with several plug-in connecting devices (1, 1', 1") according to any of claims 1 to 13 for connecting hoses (11) with an initially circular cross-section arranged consecutively in at least one row (53), the pressurisation cross-sections (36, 36') being so arranged that their main axes (34, 34') lie at right angles to the direction (54) of the associated row (53) of plug-in connecting devices (1, 1', 1").

19. Fluid manifold device according to claim 18, **characterised in that** it incorporates a plurality of manifold units (3) together forming a battery-like unit with side faces arranged next to each other, each of their end faces pointing in the same direction being provided with at least one plug-in connecting device (1, 1', 1"), the plug-in connecting devices (1,1', 1") of adjacent manifold units (3) being arranged consecutively in at least one row (53).

## Revendications

1. Dispositif de raccordement permettant de relier un flexible (11) dont la section transversale présente une forme de départ circulaire, comprenant une pièce réceptrice (15') contenant un canal d'écoulement (17'), pièce qui présente, à l'intérieur, un évidement (57) communiquant avec le canal d'écoulement (17'), évidement dans lequel le flexible (11) à raccorder peut venir s'emmancher et dans lequel sont prévus des moyens de sollicitation (31') internes qui définissent, dans au moins une zone de sollicitation (32'), une section de sollicitation (36') oblongue aux contours ovales ou elliptiques, dont les dimensions sont supérieures, dans la direction de l'axe principal (34'), et inférieures, dans la direction de l'axe secondaire (35') perpendiculaire à ce premier axe, au diamètre extérieur (D) du flexible (11) qui présente la forme de départ, les moyens de sollicitation (31') internes sollicitant le flexible (11) emmanché au niveau du pourtour extérieur de telle sorte que son tronçon terminal (22) possède une forme déformable (37') de section transversale oblongue, **caractérisé en ce que** la pièce réceptrice (15') présente, au moins au niveau de la zone de sollicitation (32'), un contour extérieur (62) de section transversale oblongue, de forme ovale ou elliptique, dont l'axe principal (41') coïncide avec celui (34') de la section de sollicitation (36').

2. Dispositif de raccordement selon la revendication 1, **caractérisé en ce qu'**est logé, dans l'évidement (57), un corps de maintien (65) entourant le flexible (11) emmanché, qui présente une ou plusieurs parties de maintien (66, 66') agissant sur le pourtour extérieur du flexible (11) par application d'une précontrainte élastique.

3. Dispositif de raccordement selon la revendication 2, **caractérisé en ce que** le corps de maintien (65) entoure une pince de serrage (71) pourvue. d'éléments de serrage (72) radialement mobiles sur lesquels sont prévues les parties de maintien (66').

4. Dispositif de raccordement selon la revendication 3, **caractérisé en ce que** les parties de maintien (66') sont disposées uniquement au niveau des deux sommets principaux (78) de la section de sollicitation (36').

5. Dispositif de raccordement selon l'une des revendications de 2 à 4, **caractérisé en ce qu'**il est prévu un corps de desserrage (67) semblable à un anneau et permettant de soulever les parties de maintien (66, 66'), pour retirer le flexible (11), de son pourtour extérieur.

6. Dispositif de raccordement selon l'une des revendications de 2 à 5, **caractérisé en ce que** le corps de maintien (65) fait partie des moyens de sollicitation (31) qui confèrent au flexible (11) emmanché sa forme déformable (37').

7. Dispositif de raccordement selon l'une des revendications de 1 à 6, **caractérisé en ce que** la zone de sollicitation (32') est définie, sur au moins une partie de sa longueur, par le pourtour intérieur (63) de l'évidement (57), qui fait partie des moyens de sollicitation (31').

8. Dispositif de raccordement selon l'une des revendications de 1 à 7, **caractérisé en ce que** le contour extérieur (62) de la pièce réceptrice (15') ne présente pas une forme ronde, pour correspondre à la section de sollicitation (36').

9. Dispositif de raccordement permettant de relier un flexible (11) dont la section transversale présente une forme de départ circulaire, comprenant une pièce réceptrice (15), du type tubulaire, contenant un canal d'écoulement (17), pièce dans laquelle le flexible (11) à raccorder peut venir s'emmancher et sur le pourtour extérieur (28) de laquelle sont prévus des moyens de sollicitation (31) externes qui définissent, dans au moins une zone de sollicitation (32), une section de sollicitation (36) oblongue aux contours ovales ou elliptiques, dont les dimensions sont supérieures, dans la direction de l'axe principal (34), et inférieures, dans la direction de l'axe secondaire (35) perpendiculaire à ce premier axe, au diamètre intérieur (d) du flexible (11) qui présente la forme de départ, **caractérisé en ce que** le canal d'écoulement (17) présente, au moins dans la zone de sollicitation (32), un contour intérieur (38) de section transversale oblongue, de forme ovale ou elliptique, dont l'axe principal (41) coïncide avec celui (34) de la section de sollicitation (36), les moyens de sollicitation (31) externes sollicitant le flexible (11) emmanché au niveau du pourtour intérieur de telle sorte que son tronçon terminal (22) possède une forme déformable (37) de section transversale oblongue.

10. Dispositif de raccordement selon la revendication 9, **caractérisé en ce que** la zone de sollicitation (32) est définie, sur au moins une partie de sa longueur, par la surface du pourtour extérieur (28) de la pièce réceptrice (15), qui fait partie des moyens de sollicitation (31).

11. Dispositif de raccordement selon la revendication 9 ou 10, **caractérisé en ce que**, sur le pourtour extérieur de la pièce réceptrice (15), est prévue au moins une saillie de maintien périphérique (43), qui s'applique sur le pourtour intérieur du flexible (11) emmanché.

12. Dispositif de raccordement selon l'une des revendications de 9 à 11, **caractérisé en ce que** la pièce réceptrice (15) présente, sur toute sa circonférence, une épaisseur de paroi au moins sensiblement constante.

13. Dispositif de raccordement selon l'une des revendications de 9 à 12, **caractérisé en ce que** le contour intérieur de la pièce réceptrice (15) ne présente pas une forme ronde, pour correspondre à la section de sollicitation (36).

14. Dispositif répartiteur de fluide équipé d'au moins un dispositif de raccordement, comprenant au moins un boîtier (6) qui, au niveau d'au moins une face extérieure (8) oblongue, présente au moins un dispositif de raccordement (1, 1', 1") permettant de relier un flexible, dont la section transversale présente une forme de départ circulaire, et conformé selon l'une des revendications de 1 à 13, dont la section de sollicitation (36, 36') est disposée de telle sorte que son axe principal (34) s'étend parallèlement à l'axe longitudinal (52) de la surface extérieure associée (8) du boîtier (6).

15. Dispositif répartiteur de fluide selon la revendication 14, **caractérisé en ce que** la pièce réceptrice du dispositif de raccordement (1, 1', 1"), au nombre minimum d'un, est formée directement par le boîtier (6), au nombre minimum d'un.

16. Dispositif répartiteur de fluide selon la revendication 14, **caractérisé en ce que** la pièce réceptrice (15, 15') du dispositif de raccordement (1, 1', 1"), au nombre minimum d'un, est reliée à une partie de fixation (16) pouvant être fixée au boîtier (6).

17. Dispositif répartiteur de fluide selon la revendication 16, **caractérisé en ce que** la partie de fixation (16) est emmanchée par force dans le boîtier (6), au nombre minimum d'un.

18. Dispositif répartiteur de fluide équipé d'une pluralité de dispositifs de raccordement, dans lequel plusieurs de ces dispositifs de raccordement (1, 1', 1") servant à raccorder des flexibles (11) dont la section transversale présente une forme de départ circulaire et qui sont conformés suivant l'une des revendications de 1 à 13, sont disposés successivement en au moins une rangée (53), les sections de sollicitation (36, 36') étant disposées de telle sorte que leurs axes principaux (34, 34') s'étendent perpendiculairement au sens d'alignement (54) de la rangée (53) de dispositifs de raccordement (1, 1', 1") qui leur est respectivement associée.

19. Dispositif répartiteur de fluide selon la revendication 18, **caractérisé en ce qu'**il comprend plusieurs blocs de répartition (3) rassemblés en une unité semblable à une batterie et disposés côte à côte avec des surfaces latérales orientées les unes vers les autres, blocs de répartition qui présentent chaque fois, sur les faces frontales orientées dans la même direction, au moins un dispositif de raccordement (1, 1', 1"), ces dispositifs de raccordement (1, 1', 1") des blocs de répartition (3) adjacents étant disposés successivement sur au moins une rangée (53).
